**Europäisches Patentamt**

**European Patent Office**

**Office européen des brevets**

(19)

(11) Veröffentlichungsnummer: **0 030 690**
A1

(12) ## EUROPÄISCHE PATENTANMELDUNG

(21) Anmeldenummer: **80107660.5**

(22) Anmeldetag: **05.12.80**

(51) Int. Cl.³: **G 06 K 19/08**
**G 07 D 7/00**

(30) Priorität: **13.12.79 DE 2950129**

(43) Veröffentlichungstag der Anmeldung:
**24.06.81 Patentblatt 81/25**

(84) Benannte Vertragsstaaten:
**DE FR GB IT NL**

(71) Anmelder: **BASF Aktiengesellschaft**
**Carl-Bosch-Strasse 38**
**D-6700 Ludwigshafen(DE)**

(72) Erfinder: **Koester, Eberhard, Dr.**
**Max-Slevogt-Strasse 23**
**D-6710 Frankenthal(DE)**

(72) Erfinder: **Hack, Joachim**
**Pfarrer-Friedrich-Strasse 34**
**D-6700 Ludwigshafen(DE)**

(72) Erfinder: **Steuerwald, Manfred**
**Weidenstrasse 3B**
**D-6710 Frankenthal(DE)**

(54) **Verfahren und Vorrichtung zur Echtheitsprüfung von Aufzeichnungsträgern, die gegen Fälschung zu sichern sind.**

(57) Die Erfindung betrifft ein Verfahren und eine Vorrichtung zur Echtheitsprüfung von Aufzeichnungsträgern, die gegen Fälschung zu sichern sind und welche eine Schicht aus magnetischem Material mit Austauschanisotropie besitzen, mittels Vergleich und Zuordnung einer Aufzeichnung vorbestimmter Signalfolge mit einer nach der Einwirkung eines vorbestimmten Temperaturzyklus und daran anschließend eines auf Null abklingenden magnetischen Wechselfeldes wegen des austauschanisotropen Verhaltens des magnetischen Materials verbleibenden Restaufzeichnung.

FIG.1

EP 0 030 690 A1

BASF Aktiengesellschaft ·                    O.Z.   0050/034185

Verfahren und Vorrichtung zur Echtheitsprüfung von Aufzeichnungsträgern, die gegen Fälschung zu sichern sind

Die Erfindung betrifft ein Verfahren und eine Vorrichtung zur Echtheitsprüfung von Aufzeichnungsträgern, die gegen Fälschung zu sichern sind und welche eine Schicht aus magnetischem Material mit Austauschanisotropie besitzen, mittels Vergleich und Zuordnung einer Aufzeichnung vorbestimmter Signalfolge  mit einer wegen des austauschanisotropen Verhaltens des magnetischen Materials verbleibenden Restaufzeichnung.

Materialien und Verfahren zur Echtheitsprüfung von Dokumenten jeglicher Art, wie Scheckkarten, Ausweiskarten, Banknoten u.ä. oder von magnetischen Aufzeichnungsträgern sind schon mehrfach vorgeschlagen worden. Hierfür lassen sich besondere magnetische oder magnetisierbare Materialien direkt oder in Form bestimmter Anordnungen einsetzen.

So ist aus der GB-PS 1 127 403 bekannt, in sogenannte Sicherheitspapiere für Banknoten oder Schecks schon während der Papierherstellung Fäden aus oder mit ferromagnetischem Material einzuarbeiten. Der Nachweis der magnetischen Eigenschaften dieses Materials soll dann später zur Identifikation dieses Sicherheitspapiers dienen. In anderer Weise, nämlich durch Aufbringen eines Zeichens oder Bildes mit Hilfe einer magnetischen Tinte im Tiefdruckverfahren auf das zu sichernde Dokument, soll gemäß US-PS 3 599 153 eine Fälschung verhindert werden, da nach einer Sättigung des magnetischen Materials in einem konstanten magnetischen Feld ein der variierenden Schichtdicke des Zeichens proportionales variierendes Signal nachweisbar wird. Zur Sicherung von Dokumenten in Form von magnetischen Aufzeichnungsträgern wird  in der GB-PS 1 331 604 vorgeschlagen, nadelförmige magnetische

Sob/BL

Partikel in ausgewählten, in Abstand zueinander angeordneten Bereichen einer Schicht aus solchen Partikeln in einer vorbestimmten Richtung fest zu orientieren, jedoch die Partikel im Restbereich der Schicht nicht zu orientieren oder sie in einer im wesentlichen dazu senkrechten Richtung zu orientieren. Solch eine Anordnung ist heute bekannt als magnetisches "Wasserzeichen". Demgegenüber ist in der US-PS 3 566 356 ein Sicherheitsdokument mit magnetischer Aufzeichnung offenbart, das eine oder mehrere Schichten eines zusammengesetzten magnetisierbaren Materials mit besonderen Hysteresismerkmalen aufweist. Die Überprüfung des Dokumentes auf Echtheit erfolgt durch Vergleichen der Signalansprache, wenn das Dokument der Einwirkung eines entmagnetisierenden Feldes ausgesetzt wird, mit einem vorherbestimmten Bereich von Signalwerten, die von den Hysteresismerkmalen des Materials abhängig sind. Nichtendgültige Daten können in dem Material unter Anwendung herkömmlicher Verfahren magnetisch aufgezeichnet werden. Bei einem solchen Dokument müssen jedoch, wie geschildert, besondere Kombinationen von magnetisierbaren Materialien verwendet werden.

In den US-PS 3 052 353 und 3 328 195 sind noch weitere andere mehrschichtige magnetische Aufzeichnungsmedien offenbart, die auf verschiedene Frequenzbereiche ansprechen oder bei denen in der einen Schicht eine leicht zu löschende kurzfristige Information und in der anderen Schicht eine schwer löschbare Information aufgezeichnet werden kann. Solche Medien können für Sicherheitsdokumente verwendet werden, wobei eine Echtheitsprüfung in der Weise erfolgen könnte, daß die Anwesenheit eines besonderen, feststehenden Informationsmusters, z.B. eines Kodemusters ermittelt wird, das in der für schwer löschbare Information vorgesehenen Schicht aufgezeichnet wird.

Jedoch kann auch in diesem Falle eine Fälschung des Dokumentes unter Anwendung herkömmlicher Aufzeichnungsverfahren in der Weise durchgeführt werden, daß ein solches aufgezeichnetes Informationskodemuster gelöscht oder verändert wird.

Neben den bereits geschilderten Mängel besitzen alle diese Verfahren außerdem den Nachteil, daß die benutzten ferro- oder ferrimagnetischen Materialien selbst unter Berücksichtigung der äußerst hochkoerzitiven Kobalt-Seltene Erden-Verbindungen leicht erhältlich oder aber entsprechend ersetzbar sind. Damit läßt sich aber die angestrebte Wirkung im Hinblick auf die Sicherung solcher Dokumente nicht zweifelsfrei erreichen.

Aus diesem Grunde ist auch schon vorgeschlagen worden (US-PS 3 883 892), magnetische Aufzeichnungsträger unter Verwendung von austauschanisotropem Material als sogenannte Dokumentenbänder herzustellen.

Magnetisches Material mit Austauschanisotropie besteht aus einem dünnen ferro- oder ferrimagnetischen Film, auf den ein antiferromagnetischer Film aufgebracht wurde oder aus kleinen ferro- oder ferrimagnetischen Teilchen, die mit einer dünnen Schicht eines antiferromagnetischen Materials überzogen sind. Die ferro- oder ferrimagnetische Ordnung wird oberhalb der Curie-Temperatur $T_c$ und die antiferromagnetische Ordnung oberhalb der Neel-Temperatur $T_N$ aufgehoben. Ist $T_c > T_N$, so behält das magnetische Material mit Austauschanisotropie die Richtung der Magnetisierung des ferro- oder ferrimagnetischen Teiles in Erinnerung, wenn es mit dieser Magnetisierung auf eine Temperatur $T_N < T_2 < T_c$ erwärmt und anschließend wieder auf eine tiefere Temperatur, z.B. die Raumtemperatur $T_1 < T_N < T_c$

abgekühlt wurde. Oft reicht es schon aus, wenn $T_2$ auch etwas unterhalb $T_N$ liegt. Der ferro- oder ferrimagnetische Anteil des Materials kann dann zwar bei $T_1$ beliebig oft mit einem großen magnetischen Feld in verschiedene Richtungen magnetisiert werden, setzt man es aber einem von großen Feldstärken langsam auf Null abnehmendem Wechselfeld aus, so wird es nicht wie normales magnetisches Material auf die Magnetisierung Null entmagnetisiert, sondern es bleibt je nach Ausführung des Materials mit Austauschanisotropie ein großer Bruchteil der ursprünglichen Magnetisierung in ihrer ursprünglichen Richtung übrig.

Fälschungen von Aufzeichnungen auf solchermaßen ausgestatteten Aufzeichnungsträgern sind damit nur noch möglich, wenn dieses magnetische Material auf Temperaturen in der Größenordnung der Null-Temperatur erhitzt wird. Zur Sicherung gegen eine solche Temperaturerhöhung bzw. ihrer Anzeige bedarf es jedoch zusätzlich sogenannter irreversibler Thermoindikatoren. Wenn auch diese magnetischen Materialien mit Austauschanisotropie auf Grund ihrer besonderen Herstellungstechnik sowohl äußerst schwer erhältlich sind, als auch in ihren Eigenschaften ohne genaue Kenntnis der jeweiligen Verfahren nicht identisch vorliegen, so ist aber an diesem Verfahren zur Dokumentensicherung nachteilig, daß diese magnetischen Materialien keine optimalen Aufzeichnungseigenschaften besitzen und die vorhandenen Thermoindikatoren nicht voll den Anforderungen genügen.

Es bestand daher die Aufgabe, ein Verfahren und eine Vorrichtung zur Sicherung von Dokumenten bereitzustellen, das die geschilderten Nachteile vermeidet und unter Verwendung schwer erhältlich und duplizierbarer magnetischer Materialien an Aufzeichnungsträgern ohne zusätzliche Hilfsmittel, wie Indikatoren oder weitere magnetische Materialien, die Echtheitsprüfung gestattet.

Es wurde nun gefunden, daß die Aufgabe mit einem Verfahren zur Echtheitsprüfung von Aufzeichnungsträgern, die gegen Fälschung zu sichern sind und welche mit einer Beschichtung eines magnetischen Materials mit Austauschanisotropie, dessen Neel-Temperatur $T_N$ kleiner ist als die Curie-Temperatur $T_c$ des ferro- oder ferri-magnetischen Anteils versehen sind, gelöst werden kann, wenn man diese Beschichtung des Aufzeichnungsträgers aufeinanderfolgend

(a)   mit der magnetischen Aufzeichnung einer Signalfolge versieht,

(b)   auf eine Temperatur $T_2$, welche kleiner $T_c$ und größer $T_{AFS}$ ist, erhitzt,

(c)   auf eine Temperatur $T_1$, die kleiner $T_2$ ist, abkühlt,

(d)   einem auf Null abklingenden magnetischen Wechselfeld aussetzt, dessen Feldstärke mindestens viermal so groß wie die Koerzitivfeldstärke des vorliegenden magnetischen Materials ist, und dann

(e)   die verbleibende magnetische Aufzeichnung feststellt und mit der vorgegebenen Signalfolge gemäß Schritt (a) vergleicht.

In einer besonderen Ausführungsform des erfindungsgemäßen Verfahrens werden nach Durchführung der Schritte (a) bis (e) diese Maßnahmen anschließend mit einer anderen Signalfolge, vorzugsweise mit einer im Vergleich zur ersten Signalfolge invertierten Impulsfolge wiederholt.

Die erfindungsgemäße Vorrichtung zur Durchführung der Echtheitsprüfung enthält eine Anordnung an sich bekannter Mittel, um die im einzelnen aufgeführten Verfahrensschritte vornehmen zu können. Beispielhafte Ausführungsformen

0030690

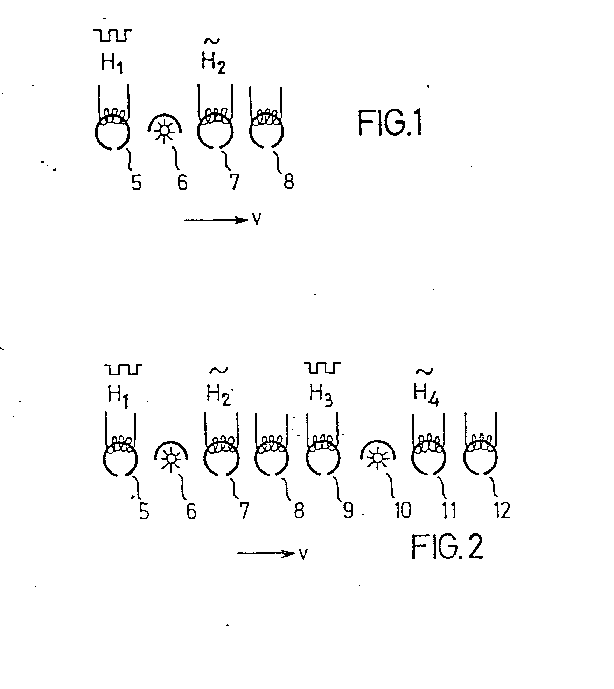

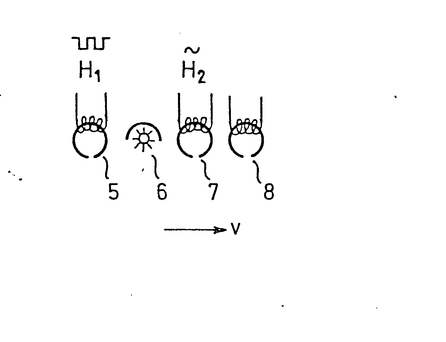

hierzu sind in den Figuren 1 und 2 dargestellt. Sie stellen schematische Darstellungen zur Durchführung des erfindungsgemäßen Verfahrens mit einfacher bzw. doppelter Signalfolge dar.

Mit Hilfe des erfindungsgemäßen Verfahrens und der entsprechenden Vorrichtung wird es möglich, das Vorhandensein eines magnetischen Materials mit Austauschanisotropie mit entsprechenden Eigenschaften einwandfrei nachzuweisen und somit einen gegenüber der Verwendung von sonstigen üblichen magnetischen Materialien erhöhten Schutz von Dokumenten gegen Fälschung zu erreichen.

Das Herstellen der Beschichtung mit austauschanisotropem Material auf den gegen Fälschung zu sichernden Aufzeichnungsträgern erfolgt in bekannter Weise. So sind bereits eine Reihe entsprechender magnetischer Materialien sowohl in Teilchenform (US-PS 2 988 466, 3 959 032, 3 961 990) wie auch in Form einheitlicher Filme (DE-OS 24 05 623) beschrieben. Letztere können unmittelbar auf das gegen Fälschung zu sichernde Dokument aufgebracht werden. Jedoch dürfte dies selten sein, da der Herstellungsprozeß Verfahrensbedingungen einschließt, welche nicht für alle Unterlagen geeignet sind. Deshalb ist es empfehlenswert, die austauschanisotropen Materialien in Teilchenform einzusetzen und diese auf bekanntem Wege zu Tinten, Pasten oder selbsttragenden Bändern oder Flächen zu verarbeiten. Hierbei lassen sich die üblichen und mehrfach beschriebenen Techniken aus dem Gebiet der magentischen Druckfarben oder Aufzeichnungträger heranziehen.

Ein auf diese Weise beschichtetes Dokument wird nun in der in Figur 1 mit v bezeichneten Richtung an der Vorrichtung zur Echtheitsprüfung mit den einzelnen Stationen 5 bis 8 mit gleichbleibender Geschwindigkeit vorbeigeführt. Dabei wird mit Hilfe des Magnetkopfes 5 eine Sig- nalfolge, beispielsweise ein Rechteckimpuls mit der magnetischen Feldstärke $H_1$, in der Beschichtung mit austauschanisotropem Material aufgezeichnet. Daraufhin wird das Material unter der Wärmequelle 6 auf eine Temperatur $T_2$ erhitzt. Diese Temperatur $T_2$ muß kleiner als die Curie-Temperatur $T_c$ des magnetischen Materials und größer als $T_{AFS}$ sein, wobei die Temperatur $T_{AFS}$ kleiner als die Neel-Temperatur $T_N$ und gleich oder größer als diejenige Temperatur ist, bei der die antiferromagnetische Achse unter dem Einfluß der vorhandenen remanenten Magnetisierung ohne den Einfluß eines äußeren magnetischen Feldes irreversibel gedreht wird. Vorzugsweise wählt man bei diesem Verfahrensschritt für $T_2$ eine Temperatur, die gleich oder nur wenig unterhalb von $T_N$ liegt. Nach diesem Aufheizen kühlen sich die Bereiche mit dem austauschanisotropen Material auf eine Temperatur $T_1$, die kleiner $T_{AFS}$ ist, üblicherweise auf Raumtemperatur ab. Durch diese Wärmebehandlung wird die Richtung der Magnetisierung des antiferromagnetischen Teils des magnetischen Materials entsprechend der Magnetisierung des ferro- oder ferrimagnetischen Teils ausgerichtet. Wirkt nun beim nächsten Verfahrensschritt der erfindungsgemäßen Echtheitsprüfung ein durch den Magnetkopf 7 erzeugtes Wechselfeld mit der Amplidude $H_2$, das langsam auf Null abklingt auf die Bereiche mit dem austauschanisotropen Material ein, so läßt sich mit dem Magnetkopf 8 ein Signal U nachweisen, da bei der Wechselfeldentmagnetisierung je nach Ausführung des Materials mit Austauschanisotropie ein großer Teil der ursprünglichen Magnetisierung der ursprünglichen Impulsfolge übrigbleibt.

In der bevorzugten Ausführungsform des erfindungsgemäßen Verfahrens wird die Echtheitsprüfung mit einer beispielhaft in Figur 2 dargestellten Vorrichtung durchgeführt. Hier wird zuerst an den Stationen 5 bis 8 entsprechend der geschilderten Arbeitsweise vorgegangen. Anschließend wird

BASF Aktiengesellschaft - 8 - O.Z. 0050/034185

mit dem Magnetkopf 9 eine neue Impulsfolge mit der Amplitude $H_3$ aufgezeichnet, welche vorzugsweise invertiert ist zu der mit dem Magnetkopf 5 aufgezeichneten. Dadurch wird der zuvor durch das abklingende Wechselfeld $H_2$ entmagnetisierte ferro- oder ferrimagnetische Teil nun erneut magnetisiert. Nach dem sich wieder daran anschließenden Erwärmen des Materials auf eine Temperatur $T_2$ mit einer der Station 6 entsprechenden Wärmequelle 10 und dem darauffolgenden Abkühlen ist der antiferromagnetische Teil des Materials in gleicher Richtung zum ferro- oder ferrimagnetischen Teil orientiert, so daß nach dem Entmagnetisieren unter dem Magnetkopf 11 mit dem auf Null abklingenden Wechselfeld $H_4$ wieder der durch das Material mit Austauschanisotropie verursachte Teil der Magnetisierung verbleibt. Mit dem Lesekopf 12 wird dieser Teil der Impulsfolge dann bestimmt.

Bei der Durchführung des erfindungsgemäßen Verfahrens ist der Betrag der magnetischen Felder $H_1$, bzw. $H_4$ nicht sehr kritisch, solange das Feld $H_2$ größer als $H_1$, bzw. $H_4$ größer als $H_3$ ist. In bevorzugter Weise sind die Felder $H_1$ und $H_3$ gleich groß und entsprechen etwa dem dreifachen Wert der Koerzitivfeldstärke $H_{CA}$ des magnetischen Materials mit Austauschanisotropie, während die ebenfalls gleich großen Felder $H_2$ und $H_4$ die etwa vierfache Größe aufweisen. Die Felder $H_1$ und $H_3$ können außer durch Magnetköpfe herkömmlicher Art auch durch andere Anordnungen wie Permanentmagnete oder Magnetspulen erzeugt werden.

Die Wärmequellen 6 und 10 lassen sich mit Strahlungsheizern bzw. erwärmten Walzen oder Platten realisieren. Es ist jedoch wichtig, daß die Bereiche mit dem magnetischen Material die Produkttemperatur $T_2$ erreichen. Außerdem mag es bei der Durchführung des erfindungsgemäßen Verfahrens vorteilhaft sein, jeweils vor den Stationen 7 und 11,

mit entsprechenden Walzen oder Platten zu kühlen, um dadurch die Temperatur $T_1$ schneller zu erreichen.

Mit dem erfindungsgemäßen Verfahren und der entsprechenden Vorrichtung läßt sich eindeutig das Vorhandensein eines magnetischen Materials mit Austauschanisotropie nachweisen und durch Einstellen der speziellen Parameter, d.h. der Temperaturen und der magnetischen Felder, das spezielle Material zweifelsfrei identifizieren. Das zusätzliche Anbringen eines Codes in Form zusätzlicher Merkmale mag zweckmäßig sein, ist aber für das erfindungsgemäße Verfahren nicht ausschlaggebend.

Die Erfindung wird anhand folgender Beispiele näher erläutert. Im Vergleich zum erfindungsgemäßen Beispiel 1 zeigt Beispiel 2, daß die Anwendung eines üblichen ferro- oder ferrimagnetischen Materials mit einer Koerzitivfeldstärke, die kleiner oder gleich derjenigen des Materials mit Austauschanisotropie ist und für das die Vorrichtung zur Echtheitsprüfung ausgelegt ist, kein Signal zeigt und Beispiel 3, daß die Verwendung eines Materials mit einer vergleichsweise sehr hohen Koerzitivfeldstärke aber auch ohne Anteil einer antiferromagnetischen Phase, kein Signal oder, falls vorher vorhanden, ein falsches, nicht mit dem geschriebenen Signal übereinstimmendes Lesesignal ergibt.

Beispiel 1

Ein magnetisches Material mit Austauschanisotropie, bestehend aus kleinen Teilchen mit einem Kern aus einer Legierung von 65 % Co und 35 % Ni und einer oberflächlichen Oxidschicht aus 65 % CoO und 35 % NiO, wird in einem gelösten Bindemittel auf der Basis eines partiell verseiften Vinylchlorid - Vinylacetat - Copolymerisates dis-

pergiert, auf eine Polyesterfolie aufgetragen und getrocknet. Das so erhaltene Band hat eine Remanenz $B_r$ von 0,13 T, eine Koerzitivkraft $H_{CA}$ von 31 kA/m und eine Neel-Temperatur $T_N$ von 100°C. Vor der weiteren Prüfung wird das Band mit einem Wechselfeld bei einer Temperatur von 110°C entmagnetisiert.

Das so erhaltene Band wird dann mit einer Geschwindigkeit von 50 mm/sec an einer Vorrichtung gemäß Figur 2 vorbeigeführt. Der dabei am Magnetkopf 5 aufgezeichnete Rechteckimpuls hat eine Amplitude $H_1$ von 100 kA/m. Des weiteren beträgt die Temperatur $T_2$ 110°C und das Wechselfeld $H_2$ hat bei einer Frequenz von 60 kHz eine Amplitude von 120 kA/m. Die Amplituden $H_3$ und $H_4$ entsprechen denen von $H_1$ und $H_2$ jedoch ist der mittels des Magnetkopfes 9 aufgezeichnete Rechteckimpuls zu dem des Aufzeichnungskopfes 5 invertiert. Mit den Magnetköpfen 8 und 12 werden jeweils die Amplituden der verbliebenen Signalinformation bestimmt und mit denen der aufgezeichneten Impulse verglichen. Die Ergebnisse sind in der Tabelle aufgeführt.

Beispiel 2

Statt eines Materials mit Austauschanisotropie wird ein Eisenoxidpulver mit einer Co-Dotierung zu einem Band verarbeitet, das eine Koerzitivfeldstärke $H_c$ von 30 kA/m aufweist. Die weitere Prüfung erfolgt in gleicher Weise wie in Beispiel 1 beschrieben. Die Ergebnisse sind in der Tabelle aufgeführt.

Beispiel 3

Statt eines Materials mit Austauschanisotropie wird ein Bariumferritpulver zu einem Band verarbeitet, das eine Koerzitivfeldstärke $H_c$ von 350 kA/m aufweist. Mit diesem Band wird wie in Beispiel 1 beschrieben vorgegangen, wobei das Bariumferritmaterial zuvor entmagnetisiert wird. Die Ergebnisse sind in der Tabelle aufgeführt.

BASF Aktiengesellschaft

- 12 -

O.Z. 0050/034185

<u>Tabelle</u>

| | Beispiel 1 | Beispiel 2 | Beispiel 3 |
|---|---|---|---|
| Koerzitivfeldstärke | $H_{CA}$ | $\nu\, H_{CA}$ | $\gg H_{CA}$ |
| Beobachtete Eigenschaften | Lesesignal Si | Lesesignal Si | Lesesignal Si |
| Ausgangswert | O | O oder Si | O |
| Schreiben mit $H_1$ | Si (+) | Si (+) | O |
| Erwärmen auf 110°C und Entmagnetisieren mit $H_2$ | | | |
| Lesen mit Kopf 8 | 0,25 Si (+) | O | O |
| Schreiben mit $H_3$ | Si (-) | Si (-) | O |
| Erwärmen auf 110°C und Entmagnetisieren mit $H_4$ | | | |
| Lesen mit Kopf 12 | 0,25 Si (-) | O | O |

Patentansprüche

1. Verfahren zur Echtheitsprüfung von Aufzeichnungsträgern, die gegen Fälschung zu sichern sind und welche mit einer Beschichtung eines magnetischen Materials mit Austauschanisotropie, dessen Neel-Temperatur $T_N$ kleiner ist als die Curie-Temperatur $T_c$ des ferro- oder ferrimagnetischen Anteils, versehen sind, dadurch gekennzeichnet, daß man diese Beschichtung des Aufzeichnungsträgers aufeinanderfolgend

   (a)  mit der magnetischen Aufzeichnung einer Signalfolge versieht,

   (b)  auf eine Temperatur $T_2$, welche kleiner $T_c$ und größer $T_{AFS}$ ist, erhitzt,

   (c)  auf eine Temperatur $T_1$, die kleiner $T_2$ ist, abkühlt,

   (d)  einem auf Null abklingenden magnetischen Wechselfeld aussetzt, dessen Feldstärke mindestens viermal so groß wie die Koerzitivfeldstärke des vorliegenden magnetischen Materials ist, und dann

   (e)  die verbleibende magnetische Aufzeichnung feststellt und mit der vorgegebenen Signalfolge gemäß Schritt (a) vergleicht.

2. Verfahren zur Echtheitsprüfung von Aufzeichnungsträgern, die gegen Fälschung zu sichern sind und welche mit einer Beschichtung eines magnetischen Materials mit Austauschanisotropie, dessen Neel-Temperatur $T_N$ kleiner ist als die Curie-Temperatur $T_c$ des ferro- oder ferrimagnetischen Anteils, versehen sind, dadurch gekennzeichnet, daß man diese Beschichtung des Aufzeichnungsträgers aufeinanderfolgend

0030690

(a) mit der magnetischen Aufzeichnung einer Signalfolge versieht,

(b) auf eine Temperatur $T_2$, welche kleiner $T_c$ und größer $T_{AFS}$ ist, erhitzt,

(c) auf eine Temperatur $T_1$, die kleiner $T_2$ ist, abgekühlt,

(d) einem auf Null abklingenden magnetischen Wechselfeld aussetzt, dessen Feldstärke mindestens viermal so groß wie die Koerzitivfeldstärke des vorliegenden magnetischen Materials ist, und dann

(e) die verbleibende magnetische Aufzeichnung feststellt und mit der vorgegebenen Signalfolge gemäß Schritt (a) vergleicht,

sowie anschließend die Schritte (a) bis (e) mit einer anderen Signalfolge wiederholt.

3. Vorrichtung zur Durchführung der Echtheitsprüfung gemäß Anspruch 1, gekennzeichnet durch eine aufeinanderfolgende Anordnung von

(a) Mittel zur Erzeugung einer magnetischen Aufzeichnung

(b) Mittel zum Erwärmen von vorbeigeführten magnetischen Materialien,

(c) Mittel zur Erzeugung eines langsam auf Null abklingenden magnetischen Wechselfeldes,

(d) Mittel zur Identifizierung einer magnetischen Aufzeichnung.

4. Vorrichtung zur Durchführung der Echtheitsprüfung gemäß Anspruch 2, gekennzeichnet durch eine aufeinanderfolgende Anordnung von

(a) Mittel zur Erzeugung einer magnetischen Aufzeichnung

0030690

(b)  Mittel zum Erwärmen von vorbeigeführten magnetischen Materialien,

(c)  Mittel zur Erzeugung eines langsam auf Null abklingenden magnetischen Wechselfeldes,

(d)  Mittel zur Identifizierung einer magnetischen
     Aufzeichnung und

eine unmittelbar anschließende Anordnung der Mittel (a)
bis (d) in gleicher Reihenfolge.

Zeichn.

0030690

1/2

FIG.1

FIG.2

0030690

2/2

| | | Nummer der Anmeldung |
|---|---|---|
| Europäisches Patentamt | EUROPÄISCHER RECHERCHENBERICHT | EP 80 10 7660 |

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe soweit erforderlich, der maßgeblichen Teile | betrifft Anspruch | G 06 K 19/08<br>G 07 D 7/00 |
| A/D | US - A - 3 883 892 (BASF) | 1 | |
| A/D | DE - A - 2 405 623 (BASF) | 1 | |
| | --------- | | |

**RECHERCHIERTE SACHGEBIETE (Int. Cl.)**

G 06 K 19/08
G 07 D 7/00
G 06 K 19/02
G 06 K 7/08
G 06 K 1/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Grunden angefuhrtes Dokument
&: Mitglied der gleichen Patentfamilie, ubereinstimmendes Dokument

Der vorliegende Recherchenbericht wurde fur alle Patentanspruche erstellt

| Recnerchenort | Abschlußdatum der Recherche | Prufer |
|---|---|---|
| Den Haag | 30.03.1981 | FORLEN |

EPA form 1503.1 06.78